# EUROPÄISCHE PATENTANMELDUNG

(11) **EP 0 736 493 A2**
(43) Veröffentlichungstag der Anmeldung: **09.10.1996**
(21) Anmeldenummer: 96102890.9
(22) Anmeldetag: 27.02.1996
(51) Int. Cl.: C02F 1/70

(54) **Katalysierte Zersetzung von H2O2**

(30) Priorität: 07.03.1995 DE 19507678
(71) Anmelder: Solvay Umweltchemie GmbH, D-30173 Hannover (DE)
(72) Erfinder: Becker, Arne, 30173 Hannover (DE); Schilm, Jochen, 30167 Hannover (DE); Sell, Michael, 31228 Peine (DE)
(74) Vertreter: Lauer, Dieter, Dr.

(57) **Zusammenfassung**

Beschrieben wird die Zersetzung von H₂O₂ in wäßriger Phase mit einem Platingruppenmetall als Katalysator. Die Geschwindigkeit der Umsetzung kann insbesondere im Fall des Palladiums gesteigert werden, wenn man die Zersetzung in Anwesenheit von elementarem Wasserstoff in der wäßrigen Lösung durchführt.

## Beschreibung

H₂O₂ (Wasserstoffperoxid) wird beispielsweise in der chemischen Synthese, für Bleichzwecke in der Textil- und Waschmittelindustrie wie auch in der Abwasseraufbereitung eingesetzt. Wasserstoffperoxid dient beispielsweise auch als Sauerstoffträger in Belebtschlammanlagen. In der Trinkwasseraufbereitung wird Wasserstoffperoxid eingesetzt, um eine keimtötende Wirkung zu erzielen. Bei der Reinigung von Industrieabwässern können anorganische Schadstoffe über Oxidationsreaktionen auf einen nicht mehr als schädlich abgestuften Restgehalt abgebaut werden.

Wasserstoffperoxid kann in Abwässern aber auch einen Inhaltsstoff darstellen, der in nachgeschalteten Aufbereitungsschritten störend wirken kann. In der Halbleiterindustrie wird Wasserstoffperoxid eingesetzt, um Leiterplatten zu reinigen. Werden die entstehenden Abwässer innerhalb des Aufbereitungsprozesses über Ionenaustauscherharze geschickt, um unerwünschte Inhaltsstoffe (Metallionen) zu entfernen, kann Wasserstoffperoxid schon in Konzentrationen unter 100 ppm in der Lage sein, diese Austauscherharze oxidativ zu schädigen. In derartigen Fällen ist es wünschenswert, Wasserstoffperoxid zu zersetzen. Auch bei der Trinkwasseraufbereitung muß ein niedriger Grenzwert erreicht werden.

Aufgabe der vorliegenden Erfindung ist es, ein Verfahren zur heterogen katalysierten Zersetzung von wäßrigen Wasserstoffperoxid enthaltenden Lösungen unter Verwendung von Platingruppenmetallkatalysatoren, insbesondere Palladiumkatalysatoren anzugeben, das mit erhöhter Umsetzungsrate bezüglich der Wasserstoffperoxidzersetzung abläuft. Diese Aufgabe wird durch das in den Ansprüchen angegebene Verfahren gelöst.

Das erfindungsgemäße Verfahren zur katalytischen Zersetzung von H₂O₂ in wäßriger Lösung an einem Platingruppenmetall ist dadurch gekennzeichnet, daß man das Platingruppenmetall auf einem wasserstabilen Träger einsetzt und man die Zersetzung in Anwesenheit von elementarem Wasserstoff in der wäßrigen Lösung durchführt. Dabei liegt das Platingruppenmetall in elementarer Form, allerdings möglichst hoch dispers, vorzugsweise amorph, auf dem Träger vor. Der Trägerkatalysator kann neben dem Platingruppenmetall (oder Gemischen derselben) noch weitere Metalle oder Metallionen aufweisen, z. B. andere die katalytische Zersetzung von H₂O₂ beeinflussende Metalle oder Metallionen. Vorzugsweise ist das Platingruppenmetall einzige katalytisch die H₂O₂-Zersetzung beeinflussende katalytisch aktive Komponente.

Man kann übliche, gegen Wasser stabile anorganische Träger einsetzen. Dabei ist dem Fachmann bekannt, daß viele Träger, die bei bestimmten pH-Werten durchaus gegen Wasser stabil sind, in anderen pH-Bereichen zerstört bzw. aufgelöst werden. Zweckmäßig setzt man Träger ein, die bei dem zur Anwendung kommenden pH-Wert, der beispielsweise von dem zu behandelnden Wasser abhängt, stabil sind. Vorzugsweise arbeitet man bei einem pH-Wert zwischen 4 und 9, dazu kann man gewünschtenfalls den pH-Wert regulierende Mittel dem zu behandelnden Wasser zusetzen. Entsprechend zweckmäßig setzt man Träger ein, die im angegebenen pH-Bereich gegen Wasser stabil sind. Bevorzugte Träger sind anorganische oxidische Träger, insbesondere solche mit einer inneren Oberfläche von 20 bis 250 m²/g.

Die Herstellung solcher Träger ist allgemein bekannt. Beispielsweise kann man anorganische oxidische Träger auf Basis von Aluminiumoxid oder Siliciumdioxid erzeugen, indem man Aluminat-Lösung oder Silikat-Lösung mit einer Säure vereinigt und das Produkt gelieren läßt, beispielsweise nach der Öltropf-Methode. Entsprechend lassen sich Alumosilikat-Träger herstellen, indem man eine saure Aluminiumsalz-Lösung mit einer Silikat-Lösung vereinigt und wiederum gelieren läßt.

Gut geeignet sind auch die Katalysator-Träger, die in der WO 93/17786 beschrieben werden und sich durch hohe Abriebfestigkeit auszeichnen. Sie haben eine monomodale oder bimodale Porenverteilung im Bereich zwischen 10 und 150 Nanometer und eine innere Oberfläche zwischen 33 und 63 m²/g. Zu ihrer Herstellung vermischt man amorphes Aluminiumoxid mit Aluminiumoxid-Hydrat, formt und kalziniert.

Besonders gut geeignet sind Träger auf Basis anorganischer Oxide, die nach der in der deutschen Offenlegungsschrift DE 44 05 202 A1 beschriebenen Methode durch Sprühgelieren hergestellt worden sind. Dabei wird ein in Form eines Sols vorliegender Vorläufer des anorganischen Oxids in eine ein Reaktionsgas enthaltende Reaktionszone von unten so eingesprüht, daß das Sol erst unmittelbar vor oder bei Eintritt in die Reaktionszone in einzelne Solperlen aufreißt. Die gebildeten Solperlen durchfliegen auf einer gekrümmten Flugbahn die Reaktionszone und werden vorverfestigt. Anschließend werden sie aufgefangen und aufgearbeitet. Diese Aufarbeitung umfaßt üblicherweise die Aufarbeitungsschritt Waschen, Trocknen und gegebenenfalls Kalzinieren; gewünschtenfalls kann man die erhaltenen kugelförmigen Teilchen vor dem Trocknen noch einer das Porenvolumen modifizierenden Behandlung unterwerfen, beispielsweise durch Behandeln mit Aceton oder einem niederen Alkylalkohol. Die Teilchen weisen eine überraschend hohe Abriebfestigkeit auf und eine Verteilung der Porendurchmesser mit einem Maximum (monomodale Porenverteilung) im Bereich von 15 bis 2.000 Å. Die in der genannten deutschen Offenlegungsschrift beschriebene Methode ist für die Herstellung einer Vielzahl von Oxiden von Metallen der Hauptgruppe oder der Nebengruppe möglich, beispielsweise kann man Träger auf Basis von Aluminiumoxid, Siliciumdioxid, Alumosilikat, Zirkoniumoxid bzw. Hafniumoxid erzeugen.

Die Imprägnierung der Träger mit dem gewünschten Platingruppenmetall erfolgt in bekannter Weise. So kann man die Träger mit einer wäßrigen Lösung von Natriumtetrachloropalladat kontaktieren. Anschließend reduziert man, z. B. mit Natriumborhydrid, Wasserstoff oder Formiat, und trocknet den Träger. Durch die Konzentration der Palladat-Lösung und die Dauer ihres Kontaktes mit dem Träger kann die aufzubringende Menge an Palladium und die Art der Verteilung (homogene Verteilung des Palladiums bzw. vorzugsweise schalenförmige Verteilung des Palladiums in peripheren Bereichen des Trägers) eingestellt werden.

Bevorzugt verwendet man Palladium auf einem Träger aus Aluminiumoxid, insbesondere auf einem Träger von γ-Aluminiumoxid, welche durch die vorstehend beschriebene Sprühgelierungsmethode erzeugt worden ist. Anhand dieses bevorzugten Katalysatormaterials wird die Erfindung weiter erläutert.

Es hat sich gezeigt, daß die Zersetzung von H₂O₂ an den Palladiumträgerkatalysatoren besonders dann stark beschleunigt werden kann, wenn man das Kontaktieren der Wasserstoffperoxid enthaltenden wäßrigen Lösung mit dem Trägerkatalysator unter Verfahrensbedingungen durchführt, die eine etwaige Diffusionslimitierung aufheben bzw. verhindern, daß es zu einer Diffusionslimitierung kommt. Dies kann man insbesondere dadurch bewirken, daß die wäßrige Lösung mit dem darin gelösten Wasserstoff mit ausreichend hoher Geschwindigkeit am Katalysatorkorn vorbeiströmt. Bei kontinuierlicher Arbeitsweise kann man beispielsweise für eine hohe Strömungsgeschwindigkeit der wäßrigen Lösung beim Durchfluß durch den Reaktor sorgen. In diskontinuierlich betriebenen Anlagen kann man durch geeignete Mittel, beispielsweise eine eingebaute Pumpe oder eingebaute Mischer, für eine gute Verwirbelung oder eine hohe Strömung der wäßrigen Lösung im Reaktor sorgen.

Die Löslichkeit von Wasserstoff in Wasser ist sehr gering; so enthält eine gesättigte wäßrige Lösung bei 5 bar lediglich etwa 7,5 ppm Wasserstoff. In der Praxis liegt der Sättigungsgrad unterhalb von 100 %. Deshalb ist es vorteilhaft, sofern Wasserstoffperoxid in höheren Konzentrationen im Wasser enthalten ist und auch der gebildete Sauerstoff zu Wasser reduziert werden soll, den Wasserstoff bei erhöhtem Druck in das Wasser einzutragen. Um Wasserstoffperoxid im Konzentrationsbereich um 100 ppm schnell abzubauen, sollte man z. B. bei einem Druck von etwa 5 bar arbeiten. Alternativ kann man das zu behandelnde Abwasser auch mehrfach mit Wasserstoff versetzen und über den Katalysator führen, bis der Gehalt an Wasserstoffperoxid auf das gewünschte Maß abgebaut ist. Soll das Wasserstoffperoxid nicht nur zersetzt, sondern nach der Reaktionsgleichung H₂O₂ + H₂ → 2H₂O auch der Sauerstoff reduziert werden, muß Wasserstoff mindestens in der stöchiometrisch benötigten Menge zugeführt werden, hierzu kann man auch bei erhöhtem Wasserdruck, bis hin zu 20 bar oder höher, arbeiten. Eine Durchführung im diffusionslimitierten Bereich (geringe Strömungsgeschwindigkeit) ist nicht von Nachteil, eher sogar vorteilhaft.

Ist die Reduktion des bei der Zersetzung entstehenden Sauerstoffs nicht notwendig, ist weniger Wasserstoff notwendig, als der Stöchiometrie entspricht, beispielsweise weniger als die Hälfte. Hier ist das Arbeiten bei hoher Strömungsgeschwindigkeit mit geringer Diffusionslimitierung oder ohne Diffusionslimitierung vorteilhaft. Bei geringer H₂O₂-Konzentration (z. B. 150 ppm oder weniger) ist oft nicht einmal das Arbeiten bei Überdruck notwendig. Arbeitet man bei höheren Wasserdrücken, kann mehr Wasserstoff in Lösung gehen, entsprechend höher kann die Zersetzung von H₂O₂ sein und damit die Konzentration an H₂O₂, die abgebaut werden kann.

Bemerkenswert ist der Einfluß des pH-Wertes auf die Reaktionsgeschwindigkeit. Versuche mit einem Katalysator, der 0,5 Gew.-% Palladium schalenförmig aufgebracht auf einem durch Sprühgelieren hergestellten γ-Aluminiumoxidträger enthielt, haben gezeigt, daß dieser Katalysator in Abwesenheit von Wasserstoff bei einem pH-Wert von 4,5 keinerlei Aktivität bezüglich der Zersetzung von Wasserstoffperoxid mehr aufwies. Bei einem pH-Wert um 9 war seine Aktivität sehr groß. Derselbe Trägerkatalysator wies in Anwesenheit von Wasserstoff beim Kontaktieren selbst bei einem pH-Wert von 4 noch eine Aktivität bezüglich der Wasserstoffperoxidzersetzung auf, die höher war als die höchste zu erreichende Aktivität in Abwesenheit von Wasserstoff. Dies ist in Abbildung 1 wiedergegeben. Die in Anwesenheit von Wasserstoff gewonnenen Meßwerte sind mit Sternchen eingetragen, die in Abwesenheit von Wasserstoff gewonnenen Werte mit einem Punkt. Infolgedessen kann das erfindungsgemäße Verfahren auch bei Abwässern durchgeführt werden, bei denen aufgrund des pH-Wertes eine katalytische Aktivität der Palladiumkatalysatoren im bezug auf die Wasserstoffperoxidzersetzung ansonsten nur in geringem Maße oder gar nicht vorhanden ist.

Die Palladiumkonzentration auf den Trägern kann in einem weiten Bereich schwanken, zweckmäßig liegt sie zwischen 0,05 Gew.-% bis 2 Gew.-%, vorzugsweise 0,3 bis 1 Gew.-%.

Die Wasserstoffperoxidzersetzung erfolgt umso schneller, je höher die Temperatur ist. Zweckmäßig arbeitet man bei Temperaturen zwischen 0 und 80 °C, vorzugsweise 5 bis 45 °C.

Das erfindungsgemäße Verfahren ist besonders gut geeignet, um Wasser zu behandeln, welches bis zu 500 ppm Wasserstoffperoxid enthält.

Das erfindungsgemäße Verfahren weist den Vorteil auf, daß die katalytische Zersetzung von Wasserstoffperoxid in wäßriger Phase stark beschleunigt werden kann. Dies gilt besonders für Palladiumträgerkatalysatoren. Hier ist eine überraschende Wirkung auch darin zu verzeichnen, daß nunmehr bei pH-Werten zersetzt werden kann, bei welchen Palladiumträgerkatalysatoren an sich ganz wirkungslos sind. Dabei kann man bis zu einem pH-Wert von 2 oder niedriger arbeiten.

Ein Palladiumträgerkatalysator, der besonders gut zur katalytischen Zersetzung von Wasserstoffperoxid in Wasserstoffperoxid enthaltenden Lösungen geeignet ist, ist folgendermaßen erhältlich: man verwendet einen γ-Aluminiumoxid-Träger, welcher gemäß der Lehre der deutschen Offenlegungsschrift DE 44 05 202 A1 hergestellt wurde, nämlich durch Sprühgelieren eines sauren Aluminiumoxidsols mit Ammoniak als Reaktivgas, Waschen der erhaltenen Gelperlen, Trocknen der Perlen und Kalzinieren bei einer Temperatur im Bereich von 500 bis 700 °C. Gegebenenfalls kann vor dem Trocknen durch Behandeln mit einem wasserlöslichen organischen Lösungsmittel wie Aceton oder einem C1 - C4-Alkohol modifiziert worden sein. Der derart hergestellte γ-Aluminiumoxid-Träger wird dann derart mit Palladium belegt, daß das Palladium in einer Menge von 0,05 bis 2 Gew.-% schalenförmig auf dem Träger aufgebracht ist. Der auf diese Weise erhaltene feuchte Trägerkatalysator wird dann mindestens 5 Tage lang einer Luftatmosphäre ausgesetzt; dies erfolgt vorzugsweise bei Umgebungstemperatur. Ein auf diese Weise hergestellter Trägerkatalysator unterscheidet sich von einem ansonsten völlig analog hergestellten Trägerkatalysator, welcher jedoch nicht mindestens 5 Tage lang einer Luftatmosphäre ausgesetzt worden ist, durch die Umsetzungsrate der Wasserstoffperoxidzersetzung: sie ist bei dem der Luftatmosphäre ausgesetzten Trägerkatalysator um mindestens 10 % erhöht. Ein solcher, durch Kontaktieren mit einer Luftatmosphäre über einen Zeitraum von mindestens 5 Tagen hergestellter Trägerkatalysator ist ebenfalls Gegenstand der Erfindung.

Das erfindungsgemäße Verfahren kann auf Wässer oder Abwässer angewendet werden, die Wasserstoffperoxid und gegebenenfalls weitere Verunreinigungen wie Metallsalze, Säuren, Laugen, organische Bestandteile wie Glykole, Amine oder Aromaten enthalten.

Die folgenden Beispiele sollen die Erfindung weiter erläutern, ohne sie in ihrem Umfang einzuschränken.

### Beispiel 1:

### Herstellung der Palladiumträgerkatalysatoren

### 1.1. Herstellung der Träger

Die Herstellung erfolgte gemäß der Lehre der DE 44 05 202 A1. Aluminiumoxid-Hydrat (Condea Pural SB™, Hersteller Condea Chemie, Brunsbüttel) wurde mit Salpetersäure aufgeschlämmt und in eine mit Ammoniak als Reaktionsgas gefüllte Reaktionszone eingesprüht. Die resultierenden Gel-Perlen wurden nach dem Altern mit wasserfreiem Isopropanol nachbehandelt, bei 150 °C getrocknet und 4 Stunden lang bei 600 °C kalziniert.

Die Partikelgröße lag im Bereich von 400 bis 600 Mikrometern, die spezifische Oberfläche betrug 176 bis 210 m²/g, das Porenvolumen 0,55 bis 0,59 l/kg, das Schüttgewicht 0,62 bis 0,72 kg/l.

### 1.2. Belegung der Träger mit Palladium

Stammlösung war eine wäßrige Lösung von Na₂PdCl₄ mit einem Palladiumgehalt von 50 g/l.

### 1.2.1. Herstellung eines Trägerkatalysators mit 0,2 Gew.-% Palladium

Eingesetzt wurden 100 g des gemäß 1.1. hergestellten Trägers, der zunächst dreimal mit destilliertem Wasser gewaschen wurde. 4 ml der Palladat-Stammlösung wurden mit destilliertem Wasser zu 250 ml aufgefüllt und über das feuchte Trägermaterial gegeben, das dann 10 Minuten lang in der Lösung geschüttelt wurde. Das Trägermaterial wurde 5 Minuten lang ohne Schütteln in der Lösung belassen, der Überstand wurde dann abgegossen und der getränkte Träger mit NaBH₄-Lösung zwecks Bildung von elementarem Palladium versetzt. Der gebildete, metallisches Palladium als katalytisch aktive Komponente enthaltende Katalysator wurde dann mit VE-Wasser gewaschen und getrocknet.

Das Palladium war weitgehend im Schalenbereich des Trägers lokalisiert.

### 1.2.2. Herstellung eines Katalysators mit 0,5 Gew.-% Palladium

Die Herstellung erfolgte analog zu der in 1.2.1. beschriebenen Vorgehensweise, jedoch wurden 10 ml der Palladat-Stammlösung auf 250 ml Gesamtlösung aufgefüllt.

Auch bei diesem Katalysator war das Palladium weitgehend im Schalenbereich des Trägers lokalisiert.

### 1.2.3. Herstellung eines Katalysators mit 0,8 Gew.-% Palladium

Diesmal wurden 16 ml der Palladat-Stammlösung auf 250 ml aufgefüllt und unter starkem Schütteln auf den gewaschenen Träger gegeben. Dann wurde der Träger unter gelegentlichen Schütteln noch 20 Minuten in der Lösung belassen. Der Überstand wurde dann abgegossen, der Katalysator dreimal mit VE-Wasser gewaschen und getrocknet.

Die gemäß den vorstehenden Beispielen hergestellten Katalysatoren wiesen eine spezifische Oberfläche von 209 m²/g, ein Porenvolumen von 0,59 l/kg und ein Schüttgewicht von 0,62 kg/l auf.

### 1.2.4. Herstellung eines Katalysators mit 1 Gew.-% Palladium

Beispiel 1.2.2. wurde wiederholt. Der Träger wurde jedoch nicht mit einem Isopropylalkohol, sondern dem Azeotrop aus Wasser und Isopropylalkohol modifiziert. Außerdem wurden 20 ml der Palladat-Stammlösung eingesetzt. Die spezifische Oberfläche betrug 176 m²/g, das Porenvolumen 0,55 l/kg, das Schüttgewicht 0,72 kg/l.

### Beispiel 2:

### Anwendung der Katalysatoren zur Zersetzung von Wasserstoffperoxid bei einem Wasserstoffdruck von 1 bar (Umgebungsdruck)

- Apparatur:: Die Umsetzung wurde in einem temperierbaren Doppelmantelfestbettreaktor durchgeführt.

Die zu behandelnde Lösung wurde mittels einer Kreiselpumpe durch das Festbett im Kreislauf geführt. Der Wasserstoffeintrag erfolgte über eine Nadel, die in die zu behandelnde Lösung ragte. In Strömungsrichtung hinter dem Festbettreaktor befanden sich Meßanschlüsse für die Bestimmung des pH-Wertes, des Wasserstoffperoxidgehalts und des H₂-Gehalts sowie eine Probenentnahmestelle. Der Sauerstoffgehalt wurde mittels einer Sauerstoff-Elektrode in einer Durchflußzelle über einen Bypass vor der Kreiselpumpe aber hinter dem Ort des Wasserstoffeintrags gemessen. Die Kreiselpumpe wurde so eingestellt, daß eine Strömungsgeschwindigkeit der Lösung von 11 cm/sec. im Reaktor vorlag. Aufgrund der hohen Strömungsgeschwindigkeit war die Umsetzung im wesentlichen nicht diffusionslimitiert.

Die Menge des Wasserstoffeintrags wurde über einen Massendurchflußregler geregelt. Zur pH-Wert-Einstellung konnte in Strömungsrichtung hinter dem Festreaktor Säure (Salzsäure) oder Lauge (Natronlauge) eindosiert werden. Die Temperierung der zu behandelnden wäßrigen Wasserstoffperoxid-Lösung wurde über den temperierbaren Doppelmantelfestbettreaktor und einen zusätzlichen Rückflußkühler vorgenommen.

Vor dem Start der Versuche wurde jeweils der Sauerstoffgehalt katalytisch mittels H₂ bis auf Werte zwischen 0,8 und 1,2 mg/l in der Lösung abgesenkt.

### 2.1. Untersuchung des Einflusses der eindosierten H₂-Menge

2 g des Katalysators mit 0,5 Gew.-% des Beispiels 1.2.2. wurden in den Festbettreaktor eingebracht, nachdem der Katalysator zuvor zur Vorbehandlung 50 Stunden lang von Leitungswasser durchströmt worden war.

Der pH-Wert der Wasserstoffperoxid enthaltenden wäßrigen Lösung (auf Basis von Leitungswasser) lag bei 7,6 bis 7,7, die Temperatur betrug 25 °C. Die H₂-Flußrate wurde in Abstufungen von 150 ml zwischen 0 und 750 ml/h (1 bar abs.) bei den verschiedenen Versuchen eingeregelt.

Der Wasserstoffperoxid-Konzentrationsverlauf gegen die Zeit ist in Abbildung 2 wiedergegeben. Dabei bezeichnen die Rechtecke das Arbeiten ohne H₂-Zusatz (Vergleichsbeispiel), während die übrige Kurvenschar das Arbeiten in Anwesenheit von H₂ bezeichnet (die Rhomben einer Eindosierung von 150 ml/h, die Dreiecke einer Eindosierung von 300 ml/h, die Punkte einen Zusatz von 600 ml/h und die liegenden Rechtecke einen Zusatz von 750 ml/h an Wasserstoff). Bei den höheren Dosierungen ging der Wasserstoff nicht mehr vollständig in Lösung. Der Abbildung 2 ist zu entnehmen, daß bereits 150 ml/h an Wasserstoffzusatz ausreichen, um die Reaktionsgeschwindigkeit um den Faktor 6 bis 9 zu erhöhen.

### 2.2. Untersuchung des Einflusses des pH-Werts auf die Wasserstoffperoxidzersetzung

Die Durchführung erfolgte wie in Beispiel 2.1., jedoch wurde der pH-Wert mittels Natronlauge bzw. Salzsäure (jeweils 0,1 n) variiert im Bereich von 5 bis 8,6. Die H₂-Flußrate betrug konstant 300 ml/h, der Druck betrug wiederum 1 bar abs. Die aus den gemessenen Daten berechneten Geschwindigkeitskonstanten der einzelnen Versuche wurden gegen den jeweiligen pH-Wert aufgetragen. Eine Darstellung der Ergebnisse zeigt die Abbildung 1. Vergleichsversuche ohne H₂-Zusatz mit dem gleichen Katalysator unter gleichen Bedingungen sind durch Punkte, erfindungsgemäße Versuche mit H₂-Zusatz durch Sternchen gekennzeichnet. Aus den gemessenen Daten ergibt sich, daß beispielsweise bei einem pH-Wert von 5 ein um den Faktor 8 bis 9 größere Geschwindigkeitskonstante zu beobachten ist. Bei einem pH-Wert von 7 beträgt der Faktor immerhin noch etwa 4. Die Extrapolation zeigt, daß das erfindungsgemäße Verfahren auch bei einem pH-Wert von 4 noch sehr gut durchführbar ist, während ohne Wasserstoffzusatz die Katalysatoraktivität im Bereich von 0 liegt.

### Beispiel 3:

### Zersetzung von H₂O₂ in Anwesenheit von Wasserstoff bei erhöhtem Druck

### Apparatur:

Ein Fallfilmreaktor (Rieselfilmkolonne) war mit einer Zuführungsleitung für Wasser (vollentsalztes Wasser) und Wasserstoff verbunden. Der Wasserstoff wurde unter einem Druck von etwa 6 bar bei 25 °C dem Wasser zugemischt. Der Fallfilmreaktor war über ein Puffergefäß mit einem Wirbelbettreaktor verbunden, welcher zur Aufnahme des jeweils eingesetzten Katalysators und zur Durchführung der Umsetzungen diente.

Eine Kolbenpumpe diente zur Druckerhöhung des in den Fallfilmreaktor eingespeisten Wassers.

Das Wasserstoffperoxid wurde über eine Leitung zwischen Fallfilmreaktor und Puffergefäß zur Herstellung einer H₂O₂-enthaltenden Lösung eingeleitet. Die Reaktoren waren temperierbar ausgeführt. Meßstellen dienten zur Kontrolle von Druck, pH-Wert, Temperatur, H₂-Gehalt, O₂-Gehalt und Wasserstoffperoxid-Gehalt.

### Durchführung:

Der Volumenstrom des Wassers wurde auf 18 l/h eingeregelt; die Strömungsgeschwindigkeit der zu behandelnden Lösung im Wirbelbettreaktor betrug 1,1 cm/sec. Die Temperatur der Lösung betrug 25 °C. Die Konzentration des in den Wirbelbettreaktor eintretenden Wassers an H₂O₂ betrug 110 bis 115 mg/l; die Eintrittskonzentration an H₂ lag zwischen 0 und 7,1 mg/l.

Eingesetzt wurden in den Versuchen jeweils 10 g der gemäß 1.2.2. bzw. 1.2.3. hergestellten Trägerkatalysatoren bzw. 20 g des gemäß Beispiel 1.2.4. hergestellten Trägerkatalysators.

Die Ergebnisse sind aus Abbildung 3 abzulesen. Demnach konnte der H₂O₂-Umsatz jeweils gesteigert werden. Die Steigerung betrug 7 % (Katalysator aus 1.2.2.), 10 % (Katalysator aus 1.2.3.) bzw. 18 % (Katalysator aus 1.2.4.).

Es ist davon auszugehen, daß eine nochmalige erhebliche Steigerung der Umsatzrate bezüglich der H₂O₂-Zersetzung bei Erhöhung der Strömungsgeschwindigkeit der zu behandelnden Lösung zu beobachten ist, da eine Diffusionslimitierung weiter herabgesetzt werden dürfte.

## Patentansprüche

1. Verfahren zur katalytischen Zersetzung von H₂O₂ in wäßriger Lösung an einem Platingruppenmetall, dadurch gekennzeichnet, daß man das Platingruppenmetall auf einem wasserstabilen Träger einsetzt und man die Zersetzung in Anwesenheit von elementarem Wasserstoff in der wäßrigen Lösung durchführt.

2. Verfahren nach Anspruch 1, dadurch gekennzeichnet, daß man Palladium auf einem anorganischen oxidischen Träger einsetzt, vorzugsweise auf einen durch Sprühgelieren hergestellten anorganischen oxidischen Träger.

3. Verfahren nach Anspruch 2, dadurch gekennzeichnet, daß das Palladium peripher auf einem anorganischen oxidischen Träger nach Art eines Schalenkatalysators aufgebracht ist.

4. Verfahren nach einem der vorhergehenden Ansprüche, dadurch gekennzeichnet, daß Palladium auf einem Träger aus Aluminiumoxid, vorzugsweise auf einem Träger von γ-Aluminiumoxid, aufgebracht ist.

5. Verfahren nach Anspruch 1, dadurch gekennzeichnet, daß man die Zersetzung von H₂O₂ unter eine Diffusionslimitierung aufhebenden Verfahrensbedingungen durchführt.

6. Verfahren nach Anspruch 1, dadurch gekennzeichnet, daß man bei einem pH-Wert zwischen 4 und 9 arbeitet.

7. Verfahren nach Anspruch 1, dadurch gekennzeichnet, daß man bei einer Temperatur im Bereich von 0 bis 80 °C, vorzugsweise 5 bis 45 °C, arbeitet.

8. Verfahren nach einem der vorhergehenden Ansprüche, dadurch gekennzeichnet, daß man Trägerkatalysatoren mit einem Gehalt von 0,05 bis 2 Gew.-%, vorzugsweise 0,3 bis 1,0 Gew.-% Palladium einsetzt.

9. Verfahren nach Anspruch 1, dadurch gekennzeichnet, daß man Wasser mit einem Gehalt von bis zu 500 ppm H₂O₂ behandelt.

10. Verfahren nach Anspruch 1, dadurch gekennzeichnet, daß man bei einem Wasserdruck von bis zu 20 bar arbeitet.

11. Trägerkatalysator zur Anwendung im erfindungsgemäßen Verfahren nach einem der Ansprüche 1 bis 10, dadurch erhältlich, daß man einen Aluminiumoxid-Träger, erhalten durch Sprühgelieren, Waschen, Trocknen, Kalzinieren bei einer Temperatur im Bereich von 500 bis 700 °C, welcher gegebenenfalls vor dem Trocknen durch Behandeln mit einem wasserlöslichen organischen Lösungsmittel wie Aceton oder einem C1 - C4-Alkohol modifiziert wurde, mit Palladium belegt, so daß das Palladium in einer Menge von 0,05 bis 2 Gew.-% peripher auf dem Träger aufgebracht ist, und man den so erhaltenen feuchten Trägerkatalysator mindestens 5 Tage lang einer Luftatmosphäre aussetzt, mit der Wirkung, daß die Umsetzungsrate der H₂O₂-Zersetzung in Anwesenheit dieses Katalysators um mindestens 10 % erhöht wird.
